# FASCICULE DE BREVET EUROPEEN

(11) **EP 0 618 568 B1**
(45) Date de publication et mention de la délivrance du brevet: **23.12.1998**
(21) Numéro de dépôt: 94201146.1
(22) Date de dépôt: 28.10.1987
(51) Int. Cl.: G11B 5/31

(54) **Tête magnetique d'enregistrement/lecture en couches minces et son procédé de réalisation**
Dünnschicht-Aufnahme-Wiedergabemagnetkopf und Herstellungsverfahren
Thin layer recording/reproducing magnetic head and production method

(30) Priorité: 28.10.1986 FR 8614974
(43) Date de publication de la demande: 05.10.1994
(62) Demande divisionnaire de: 87402430.0
(73) Titulaire: THOMSON-CSF, 75008 Paris (FR)
(72) Inventeur: Lehureau, Jean-Claude, F-92402 Courbevoie Cedex (FR)
(74) Mandataire: Guérin, Michel

(56) Documents cités:
- US-A- 3 478 341
- PATENT ABSTRACTS OF JAPAN vol. 10, no. 10 (M-539) (2409) 28 Novembre 1986 & JP-A-61 151 818 (HITACHI LTD) 10 Juillet 1986
- PATENT ABSTRACTS OF JAPAN vol. 10, no. 45 (P-430) (2102) 21 Février 1986 & JP-A-60 191 407 (HITACHI SEISAKUSHO K. K.) 28 Septembre 1985
- PATENT ABSTRACTS OF JAPAN vol. 6, no. 27 (P-102) (905) 17 Février 1982 & JP-A-56 145 517 (FUJITSU K. K.) 12 Novembre 1981
- IBM TECHNICAL DISCLOSURE BULLETIN, vol.15, no.2, Juillet 1972, ARMONK, N. Y., US pages 516 - 517 R. B. WATROUS 'Horizontal Thin-Film Head with symmetrical windings'
- PATENT ABSTRACTS OF JAPAN vol. 10, no. 195 (P-475) (2251) 9 Juillet 1986 & JP-A-61 039 914 (KONISHIROKU PHOTO IND CO LTD) 26 Février 1986
- PATENT ABSTRACTS OF JAPAN vol. 5, no. 150 (P-81) (822) 22 Septembre 1981 & JP-A-56 083 823 (FUJITSU K. K.) 8 Juillet 1981

## Description

L'invention concerne une tête d'enregistrement /lecture en couches minces et son procédé de réalisation applicable notamment aux têtes magnétiques.

Dans la technologie connue de réalisation des têtes magnétiques en couches minces, l'entrefer de la tête magnétique est réalisé par superposition de couches magnétiques constituant le premier pôle magnétique, d'une couche non magnétique constituant l'entrefer proprement dit, enfin d'une autre succession de couches magnétiques constituant le deuxième pôle.

A titre d'exemple, une telle tête magnétique est décrite dans FR-A-2 597 247.

L'ensemble est gravé de manière à définir la hauteur de l'entrefer correspondant à la largeur de piste. après sciage, cet entrefer est poli de manière à ajuster la profondeur de l'entrefer.

Les nombreux types de têtes en couches minces différent par la nature des substrats, superstrat et couches employées ainsi que le mode de réalisation du bobinage. Toutefois, le mode de réalisation de l'entrefer est toujours identique à celui mentionné ci-dessus.

L'opération d'ajustage de la profondeur de l'entrefer est individuelle et très délicate. En effet, cette profondeur ne doit pas dépasser une dizaine de microns au risque de baisser l'efficacité de la tête de manière trop importante. L'opération de sciage elle-même offre une imprécision de plusieurs dizaines de microns.

La technologie connue des têtes magnétiques à couches minces se heurte donc principalement à une phase de polissage individuelle des têtes qui est très coûteuse et présente un taux de réussite faible.

L'invention prévoit donc d'intégrer cette phase de polissage dans les opérations antérieures au sciage du substrat, réduisant ainsi son coût dans un rapport voisin du niveau d'intégration des têtes sur le substrat qui peut atteindre le taux de 1000. Par ailleurs, selon l'invention, le type de tête réalisé est plus efficient que les têtes suivant l'antérieur.

L'invention concerne donc une tête magnétique d'enregistrement/lecture en couches minces comportant :
- une pièce de substrat en matériau magnétique possédant une face principale ;
- un premier pôle de circuit magnétique situé sur cette face principale et présentant un premier flanc formant un angle avec la face principale ;
- un deuxième pôle de circuit magnétique situé sur la face principale avec une couche d'un matériau amagnétique situé entre le deuxième pôle et la face principale, ce deuxième pôle présentant également un deuxième flanc sensiblement parallèle au premier flanc et déterminant avec le premier flanc un entrefer d'épaisseur sensiblement constante (voir p. ex. JP-A-61-151818), caractérisée en ce qu'elle comporte une pièce en matériau amagnétique située sous des parties de chaque pôle voisinant avec les flancs de l'entrefer, au moins un premier bobinage d'induction magnétique disposé sur le substrat et sur la pièce en matériau amagnétique et qui entoure au moins la partie d'un pôle non située sur la pièce en matériau amagnétique.

Les différents objets et caractéristiques de l'invention apparaîtront plus clairement dans la description qui va suivre faite en se reportant aux figures annexées qui représentent :
- la figure 1, une coupe en perspective d'un exemple de réalisation d'une tête magnétique en couche
- la figure 2, une vue en coupe de la tête de la figure 1, avec les circuits d'induction de champ magnétique ;
- la figure 3, une première variante de réalisation d'une tête magnétique
- la figure 4, une deuxième variante de réalisation d'une tête magnétique
- les figures 5 et 6, un exemple de réalisation d'une tête magnétique selon l'invention dans laquelle des bobinages d'induction de champ magnétique sont déposés sur une même face de substrat que les pôles magnétiques de la tête ;
- les figures 7 à 11, différentes étapes de réalisation du procédé selon l'invention ;
- la figure 12, un mode de réalisation collectif de têtes magnétiques selon l'invention.

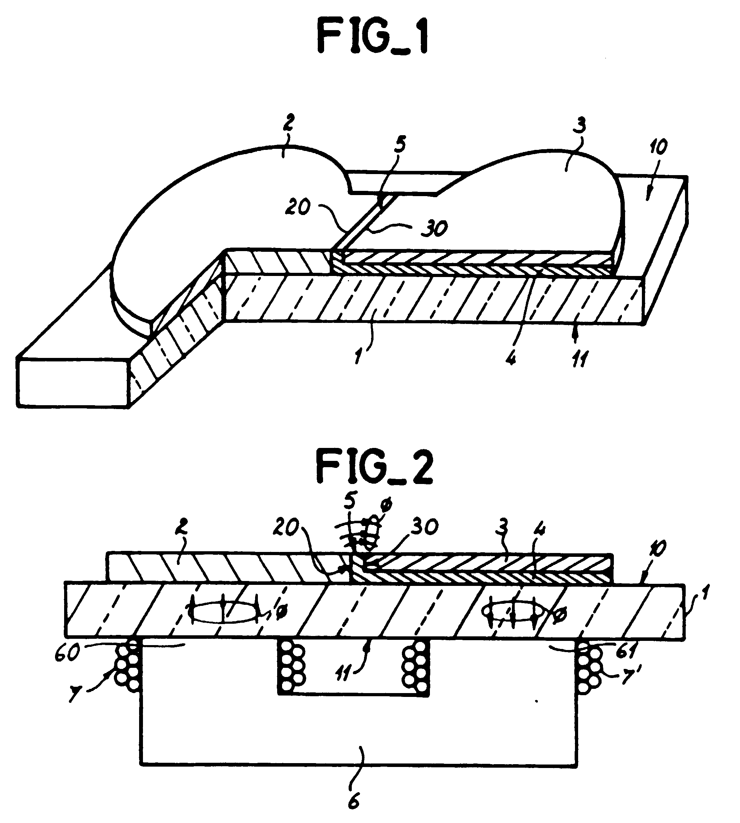

En se reportant à la figure 1, on va d'abord d'écrire un exemple de réalisation d'une tête magnétique

Cette tête comporte une pièce substrat ou pièce support 1 possédant une face plane 10.

Cette face plane 10, porte un premier pôle de tête magnétique 2 qui possède un flanc 20 formant un angle avec le plan de la face 10. Selon l'exemple de réalisation représenté sur la figure 1, le flanc 20 est sensiblement perpendiculaire au plan de la face 10. La face 10 porte également une couche 4 d'un matériau amagnétique qui recouvre le flanc 20 du premier pôle 2. La couche 4 porte un deuxième pôle 3 dont un flanc 30 est sensiblement perpendiculaire au plan de la face 10 et parallèle au flanc 20.

Les flancs 20 et 30 définissent entre les pôles 2 et 3 un entrefer 5.

Les faces supérieures des pôles 2 et 3 et de la couche amagnétique 4 sont au même niveau au moins à l'emplacement de l'entrefer 5.

Un support magnétique, non représenté, placé devant cet entrefer 5 permettra de relier magnétiquement les deux pôles et de fermer le circuit magnétique de la tête.

La figure 2, représente en vue de coupe la tête de la figure 1. La pièce support 1 est réalisée en matériau amagnétique tel que du verre et son épaisseur est faible telle qu'un champ magnétique d'enregistrement ou de lecture la traverse sans trop de perte.

De l'autre côté de la face 10 de la pièce support 1, en vis à vis avec les pôles 2 et 3, sont placées respectivement les extrémités 60 et 61 d'un circuit magnétique 6. Sur ce circuit magnétique sont placés des bobines d'induction de champ magnétique 7 et 7' à proximité des extrémités 60 et 61. Ces bobines induisent un champ magnétique qui circule par les pôles 2 et 3 selon les flèches O indiquée sur la figure 2. On voit sur cette figure qu'un support magnétique, une bande magnétique par exemple, qui serait placé à la surface supérieure des pôles 2 et 3, couplerait magnétiquement les deux pôles au-dessus de l'entrefer. La tête représentée sur la figure 2 constitue donc une tête magnétique d'enregistrement/lecture.

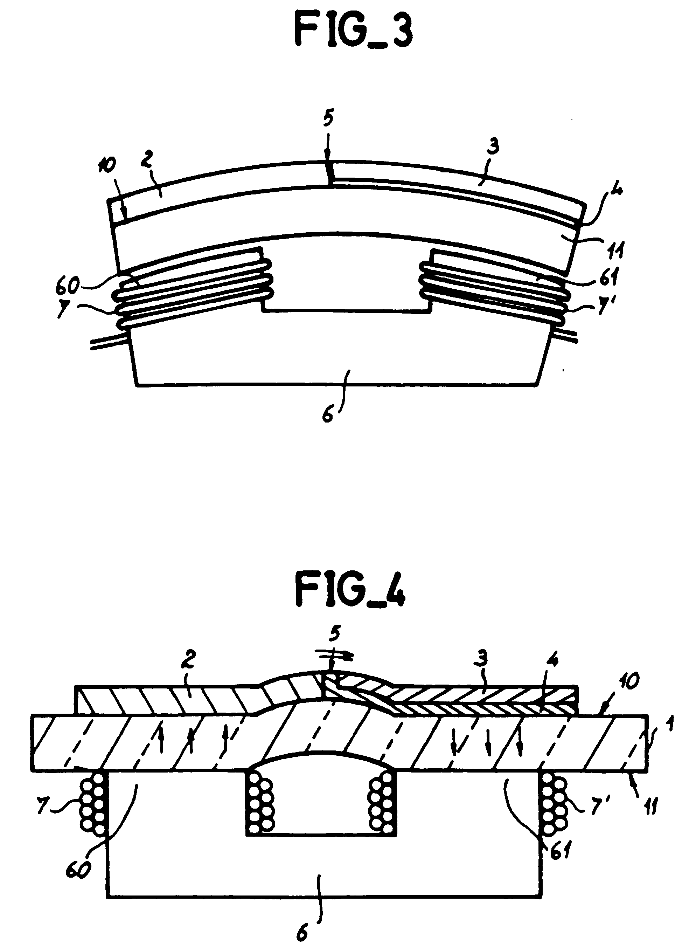

Sur les figures 1 et 2, la face supérieure de la tête est plane. Comme cela est représenté en figure 3, elle peut être courbe convexe. La pièce support 1 est courbe, notamment sa face 10. Les pôles 2 et 3, et la couche amagnétique 4 sont réalisés sur cette face 10 et ont donc une forme courbe. Il est à noter que les extrémités 60 et 61 du circuit magnétique 6 doivent être courbes pour s'adapter à la forme de la pièce 1.

Une telle tête est plus particulièrement utilisable dans les appareils d'enregistrement/lecture à bandes magnétiques où la bande peut mieux se plaquer contre la tête.

Comme représenté en figure 4, la courbure de la tête peut se limiter à une région entourant l'entrefer 5. Dans ce cas, la pièce support 1 est courbe que dans une faible région et le circuit magnétique 6 peut être conçu pour que ses extrémités 60 et 61, s'adaptent à des parties planes de la pièce 1, ce qui facilite la réalisation du circuit 6.

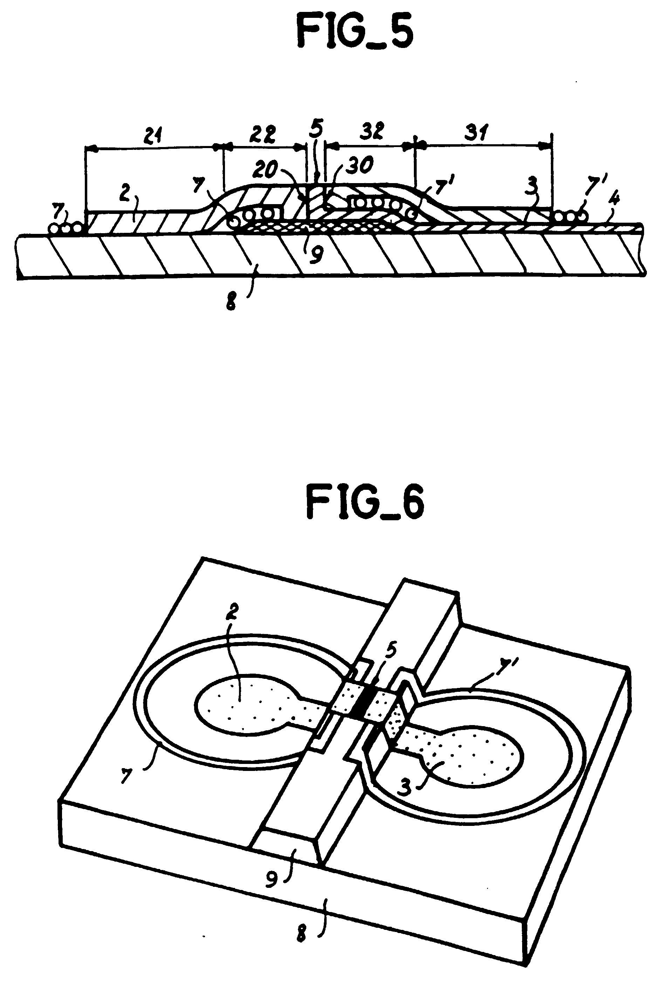

En se reportant aux figures 5 et 6, on va décrire un exemple de réalisation d'une tête magnétique selon l'invention dans laquelle le bobinage est réalisé à plat.

Cette tête comporte une plaque de substrat 8 qui est en matériau magnétique contrairement aux exemples de réalisations précédemment décrits. Sur cette plaque de substrat 8 est placée une pièce 9 en matériau amagnétique de coupe courbe convexe permettant de donner une forme bombée à la tête. Sur le substrat 9 et la pièce 9 est réalisé un premier bobinage 7 de forme par exemple hélicoïdale une partie du bobinage chevauche la pièce 9. Sa réalisation est faite par exemple par sérigraphie.

Un premier pôle magnétique 2 est en contact, par une partie 21 avec le substrat 9, au centre du bobinage hélicoïdal. De plus, il chevauche par une partie 22, le bobinage 7 et la pièce 9. Il possède un flanc 20 situé sensiblement au milieu de la pièce 9.

Une couche d'un matériau amagnétique 4 recouvre la pièce 9, le substrat 1 et le flanc 20 du pôle 2.

Un deuxième bobinage hélicoïdal 7' analogue au premier bobinage 7 repose sur la couche de matériau amagnétique 4 avec une portion chevauchant la pièce 9.

Enfin, un deuxième pôle magnétique 3 est en contact, par une partie 31, avec la couche 4 au centre du bobinage 7'.

De plus, il chevauche, par une partie 32, le bobinage 7' et la pièce 9 de telle façon qu'il présente un flanc 30 en contact avec l'isolant situé contre le flanc 20 du pôle 2. Les flancs 20 et 30 déterminent donc l'entrefer de la tête magnétique.

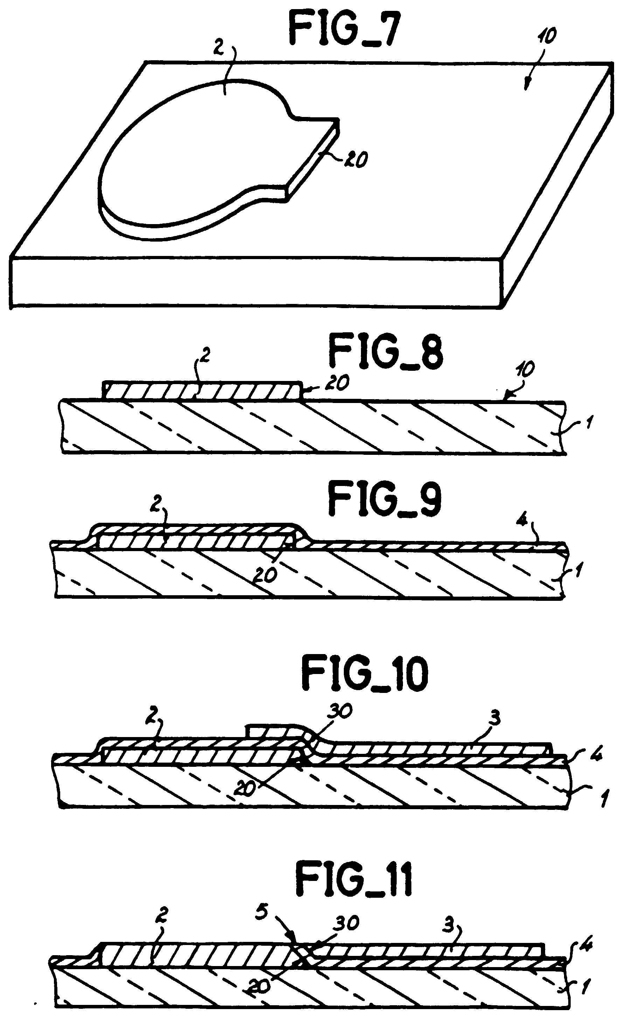

En se reportant aux figures 7 à 11, on va décrire un exemple d'un procédé de réalisation selon l'invention d'une tête magnétique telle que celle de la figure 1.

Au cours d'une première étape on réalise, sur une face 10 d'un substrat 1, un dépôt d'une couche d'un matériau magnétique puis une découpe dans cette couche, un pôle magnétique 2 possédant au moins un flanc 20 sensiblement perpendiculaire à la face 10 du substrat 1.

On obtient ainsi un composant tel que représenté sur les figures 7 et 8.

Au cours d'une deuxième étape, représentée en figure 9, on réalise un dépôt d'une couche d'un matériau amagnétique 4.

Au cours d'une troisième étape, représentée en figure 10, on réalise un dépôt d'une couche d'un matériau magnétique suivi d'une découpe dans cette couche d'un pôle magnétique 3 ayant un flanc 30 en vis-à-vis avec le flanc 20 du pôle 2.

Au cours d'une quatrième étape on réalise un usinage suivi d'un polissage ayant pour effet d'enlever la couche d'isolant situé sur le pôle magnétique 2 et d'araser les deux pôles 2 et 3 au niveau des deux flancs 20 et 30 qui déterminent l'entrefer de la tête magnétique telle que représentée en figure 1.

Le procédé permet la réalisation de plusieurs têtes, ainsi décrites, sur un même substrat. Dans ce cas à l'issue de la quatrième étape on prévoit une cinquième étape de découpe de têtes ainsi réalisées collectivement.

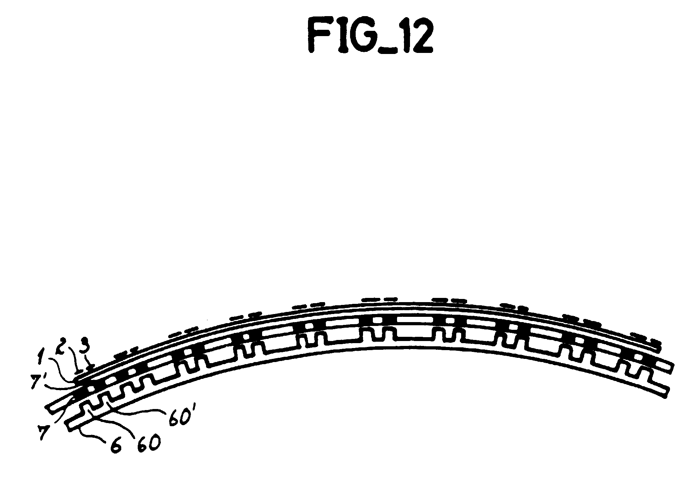

Selon le procédé, on peut également réaliser collectivement plusieurs têtes magnétiques avec leur circuit magnétique tel que décrit en se référant à la figure 2. Ce procédé de l'invention est illustré sur la figure 12.

Sur cette figure, on trouve un ensemble de têtes magnétiques 2 et 3 reposant sur une plaque de substrat 1.

Après réalisation de cet ensemble de têtes réalisées comme décrit précédemment au cours des quatre premières étapes du procédé, on réalise des paires de bobinages, telles que 7-7', moulées dans un matériau amagnétique. Ces bobinages 7-7' sont réalisés au même pas que les pôles magnétiques 2-3 de façon à pouvoir être mis en correspondance les uns des autres.

On réalise ensuite les circuits magnétiques 6 dans un matériau tel que la ferrite. Ces circuits magnétiques possèdent des paires de plots 60, 60' au même pas que les bobinages magnétiques de telle façon qu'à chaque paire de bobinages puisse être associée une paire de plots.

La plaque de substrat 1 portant les pôles magnétiques 2,3 est ensuite associée, comme cela est représenté en figure 12, à l'ensemble de bobinages et aux circuits magnétiques en ferrite 6 de telle façon qu'à chaque paire de pôles 2,3 est associée une paire de bobinages 7,7' et une paire de plots 60,60' en ferrite.

Enfin, la cinquième étape mentionnée précédemment prévoit d'individualiser chaque tête magnétique par découpe selon des traits mixtes représentés sur la droite de la figure 12..

Selon le procédé de l'invention permettant de réaliser une tête telle que celle décrite en relation avec les figures 5 et 6, on prévoit avant la première étape décrite précédemment, une phase de réalisation sur le substrat 1, d'une mésa 9 en matériau amagnétique. Ces mésas recouvre une zone qui comprendra, après réalisation l'entrefer 5 de la tête.

Ensuite, on prévoit une phase de réalisation d'un premier bobinage 7, par sérigraphie par exemple.

Ce bobinage possède une partie centrale 21 sans bobinage et chevauche une partie de la mésa 9.

La première étape décrite précédemment permet alors de réaliser un premier pôle 2 dont une partie 21 est au centre du bobinage 7 et atteint sensiblement le milieu de la mésa 9.

La deuxième étape de dépôt d une couche d'isolant est accomplie comme décrit précédemment.

Ensuite entre cette deuxième étape et la troisième étape on prévoit une phase de réalisation d'un deuxième bobinage 7'. Ce bobinage possède également une partie centrale 31 sans bobinage et chevauche une partie de la mésa 9.

La troisième étape de réalisation d'un deuxième pôle magnétique 3, telle que décrite précédemment est entreprise. Ce pôle 3 est réalisé de façon qu'une partie 31 du pôle soit au centre du bobinage 7' et une autre partie 32 recouvre le bobinage 7' et soit en vis-à-vis du premier pôle 2.

La quatrième étape d'usinage et de polissage est ensuite réalisée comme décrite précédemment.

Il est bien évident que la description qui précède n'a été faite qu'à titre d'exemple et que d'autres variantes peuvent être envisagées sans sortir du cadre de l'invention.

## Revendications

1. Tête magnétique d'enregistrement/lecture en couches minces comportant :
- une pièce de substrat (1) en matériau magnétique possédant une face principale (10) ;
- un premier pôle de circuit magnétique (2) situé sur cette face principale (10) et présentant un premier flanc (20) formant un angle avec la face principale (10) ;
- un deuxième pôle de circuit magnétique (3) situé sur la face principale (10) avec une couche (4) d'un matériau amagnétique situé entre le deuxième pôle (3) et la face principale (10), ce deuxième pôle (3) présentant également un deuxième flanc (30) sensiblement parallèle au premier flanc (20) et déterminant avec le premier flanc (20) un entrefer d'épaisseur sensiblement constante, caractérisée en ce qu'elle comporte une pièce en matériau amagnétique (9) située sous des parties (22, 32) de chaque pôle (2, 3) voisinant avec les flancs (20, 30) de l'entrefer, au moins un premier bobinage d'induction magnétique (7) disposé sur le substrat (1) et sur la pièce en matériau amagnétique (9) et qui entoure au moins la partie (21, 31) d'un pôle non située sur la pièce en matériau amagnétique (9).

2. Tête magnétique selon la revendication 1, caractérisée en ce que la pièce en matériau amagnétique (9) est courbe convexe.

3. Tête magnétique selon la revendication 1, caractérisée en ce qu'elle comporte un deuxième bobinage d'induction magnétique (7') disposé sur la couche de matériau amagnétique (4) de façon à entourer la partie (31) du deuxième pôle magnétique (3) non située au-dessus de la pièce en matériau amagnétique (9).

4. Tête magnétique selon l'une des revendications 1 ou 3, caractérisée en ce que les bobinages sont des bobinages de forme hélicoïdale.

5. Tête magnétique selon la revendication 4, caractérisée en ce que les bobinages sont de forme plane.

6. Tête magnétique selon la revendication 1, caractérisée en ce que la totalité de l'espace compris entre la face principale (10) du substrat et le deuxième pôle est occupée par la couche amagnétique (4).

7. Procédé de réalisation d'une tête magnétique en couches minces selon l'une des revendications précédentes, caractérisé en ce qu'il comporte les étapes successives suivantes:
a) une première étape de réalisation d'une mésa (9) recouvrant une zone d'un substrat (1) qui correspondra à des parties (22, 32), des pôles magnétiques (2, 3), comprenant les flancs (20, 30) ;
b) une deuxième étape de réalisation d'une bobine d'induction de champ magnétique (7), qui devra entourer ultérieurement une partie (21) du premier pôle (2) ne recouvrant pas la mésa (9) ;
c) une troisième étape de dépôt et de découpe sur une face (10) d'un substrat (1) d'un premier pôle magnétique (2) possédant un flanc (20) formant un angle avec la face (10) du substrat (1);
d) une quatrième étape de dépôt, sur l'ensemble face du substrat (1) et premier pôle magnétique (2), d'une couche d'un matériau amagnétique (4);
e) une cinquième étape de dépôt et de découpe sur la couche de matériau amagnétique (4) d'un deuxième pôle magnétique (3) dont une partie chevauche le flanc (20) du premier pôle ;
f) une sixième étape d'usinage et de polissage de la couche de matériau amagnétique (4) et du deuxième pôle magnétique (3).

8. Procédé de réalisation d'une tête magnétique en couches minces selon la revendication 7, caractérisé en ce qu'au cours des quatre premières étapes, plusieurs têtes magnétiques sont réalisées sur le même substrat et qu'il comporte une cinquième étape de découpe d'au moins une tête magnétique.

9. Procédé de réalisation selon la revendication 8, caractérisé en ce qu'il comporte entre la troisième et la quatrième étape, une phase de réalisation d'une bobine d'induction de champ magnétique (7') qui devra entourer une partie (31) du deuxième pôle (3) ne recouvrant pas la mésa (9).

## Claims

1. Thin-film magnetic read/write head, comprising;
- a piece of substrate (1) made of magnetic material, having a principal face (10);
- a first magnetic circuit pole (2) lying in this principal face (10) and having a first side wall (20) making an angle with the principal face (10);
- a second magnetic circuit pole (3) lying on the principal face (10) with a layer (4) of a non-magnetic material lying between the second pole (3) and the principal face (10), this second pole (3) also having a second side wall (30) approximately parallel to the first side wall (20) and defining with the first side wall (20) a gap of approximately constant thickness,
characterized in that it includes a piece of non-magnetic material (9), lying under parts (22, 32) of each pole (2, 3) adjacent to the side walls (20, 30) of the gap, and at least a first magnetic induction coil (7) which is located on the substrate (1) and on the piece of non-magnetic material (9) and which surrounds at least that part (21, 31) of a pole which does not lie on the piece of non-magnetic material (9).

2. Magnetic head according to Claim 1, characterized in that the piece of non-magnetic material (9) is convexly curved.

3. Magnetic head according to Claim 1, characterized in that it includes a second magnetic induction coil (7') located on the layer of non-magnetic material (4) so as to surround that part (31) of the second magnetic pole (3) which does not lie above the piece of non-magnetic material (9).

4. Magnetic head according to either of claims 1 and 3, characterized in that the coils are coils of helical form.

5. Magnetic head according to Claim 4, characterized in that the coils are of planar form.

6. Magnetic head according to Claim 1, characterized in that the entire space lying between the principal face (10) of the substrate and the second pole is occupied by the non-magnetic layer (4).

7. Process for the production of a thin-film magnetic head according to one of the preceding claims, characterized in that it comprises the following successive steps:
a) a first step of producing a mesa (9) covering a region of a substrate (1) which will correspond to parts (22, 32) of the magnetic poles (2, 3), including the side walls (20, 30);
b) a second step of producing a magnetic field induction coil (7) which will subsequently have to surround a part (21) of the first pole (2) not covering the mesa (9);
c) a third step of depositing a first magnetic pole (2), having a side wall (20) making an angle with a face (10) of a substrate (1), on the face (10) of the substrate (1) and of cutting the said first magnetic pole;
d) a fourth step of depositing a layer of a non-magnetic material (4) on the entire face of the substrate (1) and first magnetic pole (2);
e) a fifth step of depositing a second magnetic pole (3), part of which overlaps the side wall (20) of the first pole, on the layer of non-magnetic material (4) and of cutting the said second magnetic pole;
f) a sixth step of machining and of polishing the layer of non-magnetic material (4) and the second magnetic pole (3).

8. Process for the production of a thin-film magnetic head according to Claim 7, characterized in that, during the first four steps, several magnetic heads are produced on the same substrate and in that it includes a fifth step of cutting off at least one magnetic head.

9. Production process according to Claim 8, characterized in that it includes, between the third and fourth steps, a phase for production of a magnetic field induction coil (7') which will have to surround a part (31) of the second pole (3) not covering the mesa (9).

## Patentansprüche

1. Dünnschicht-Aufnahme/Wiedergabe-Magnetkopf mit
- einem Substratstück (1) aus magnetischem Material, das eine Hauptfläche (10) aufweist;
- einem ersten Magnetkreispol (2), der auf der Hauptfläche (10) angeordnet ist und eine erste Seitenwand (20) aufweist, die in einem Winkel zur Hauptfläche (10) steht;
- einem zweiten Magnetkreispol (3), der über der Hauptfläche (10) angeordnet ist, wobei eine Schicht (4) aus nichtmagnetischem Material zwischen dem zweiten Pol (3) und der Hauptfläche (10) liegt und der zweite Pol (3) eine zweite Seitenwand (30) aufweist, die im wesentlichen parallel zur ersten Seitenwand (20) steht und zusammen mit der ersten Seitenwand (20) einen Spalt mit im wesentlichen konstanter Dicke bildet, dadurch gekennzeichnet, daß er ein Teil aus nichtmagnetischem Material (9), das unter den Abschnitten (22, 32) der Pole liegt, die an die Seitenwände (20, 30) des Spalts angrenzen, und wenigstens eine erste Magnetinduktionswicklung (7) umfaßt, die auf dem Substrat (1) und auf dem Teil (9) aus nichtmagnetischem Material angeordnet ist und wenigstens den Abschnitt (21, 31) eines Pols umgibt, der nicht auf dem Teil (9) aus nichtmagnetischem Material angeordnet ist.

2. Magnetkopf nach Anspruch 1, dadurch gekennzeichnet, daß das Teil (9) aus nichtmagnetischem Material konvex gekrümmt ist.

3. Magnetkopf nach Anspruch 1, dadurch gekennzeichnet, daß er eine zweite Magnetinduktionswicklung (7') umfaßt, die auf der Schicht (4) aus nichtmagnetischem Material so angeordnet ist, daß sie den Abschnitt (31) des zweiten Magnetpols (3) umgibt, der nicht über dem Teil (9) aus nichtmagnetischem Material liegt.

4. Magnetkopf nach einem der Ansprüche 1 oder 3, dadurch gekennzeichnet, daß die schraubenlinienförmige Wicklungen sind.

5. Magnetkopf nach Anspruch 4, dadurch gekennzeichnet, daß die Wicklungen flach sind.

6. Magnetkopf nach Anspruch 1, dadurch gekennzeichnet, daß der gesamte Raum zwischen der Hauptfläche (10) des Substrats und dem zweiten Pol durch die nichtmagnetische Schicht (4) ausgefüllt ist.

7. Verfahren zur Herstellung eines nach einem der vorhergehenden Ansprüche aufgebauten Dünnschicht-Magnetkopfes mit den folgenden aufeinanderfolgenden Schritten:
a) einem ersten Schritt zur Herstellung einer Mesainsel (9), die einen Bereich eines Substrats (1) bedeckt, der den Abschnitten (22, 32) der Magnetpole (2, 3) entspricht, die die Seitenwände (20, 30) umfassen;
b) einem zweiten Schritt zur Herstellung einer Magnetinduktionsspule (7), die einen Abschnitt (21) des ersten Pols, der die Mesainsel (9) nicht bedeckt, außen umlaufen soll;
c) einem dritten Schritt zum Abscheiden und Zuschneiden eines ersten Magnetpols (2) auf einer Fläche (10) eines Substrats (1), der eine Seitenwand (20) besitzt, die einen Winkel mit der Fläche (10) des Substrats (1) bildet;
d) einem vierten Schritt zum Abscheiden einer Schicht (4) aus nichtmagnetischem Material auf der Fläche des Substrats (1) und des ersten Magnetpols (2);
e) einem fünften Schritt zum Abscheiden und Zuschneiden eines zweiten Magnetpols (3) auf der Schicht (4) aus nichtmagnetischen Material, von dem ein Teil über die Seitenwand (20) des ersten Pols läuft; und
f) einem sechsten Schritt zum Bearbeiten und Polieren der Schicht (4) aus nichtmagnetischem Material und des zweiten Magnetpols (3).

8. Verfahren zur Herstellung eines Dünnschicht-Magnetkopfes nach Anspruch 7, dadurch gekennzeichnet, daß während der ersten vier Schritte mehrere Magnetköpfe auf demselben Substrat hergestellt werden und daß es einen fünften Schritt zum Zuschneiden wenigstens eines Magnetkopfs umfaßt.

9. Herstellungsverfahren nach Anspruch 8, dadurch gekennzeichnet, daß es zwischen dem dritten und vierten Schritt eine Phase der Herstellung einer Magnetinduktionsspule (7') umfaßt, die einen Abschnitt (31) des zweiten Pols (3), der die Mesainsel (9) nicht bedeckt, umgeben soll.
